# EUROPEAN PATENT APPLICATION

(11) **EP 1 952 691 A2**
(43) Date of publication of application: **06.08.2008**
(21) Application number: 08100695.9
(22) Date of filing: 21.01.2008
(51) Int. Cl.: A01N 43/90, A01P 3/00, A01P 21/00

(54) **Method for improving plant health by application of a triazolopyrimidine derivative**

(30) Priority: 31.01.2007 US 887407 P
(71) Applicant: BASF SE, 67056 Ludwigshafen (DE)
(72) Inventor: Tormo i Blasco, Jordi, 69469, Weinheim (DE); Freund, Annette, 67177, Limburgerhof (DE); Haber, Josef, 67117, Limburgerhof (DE); Voeste, Dirk, 67117, Limburgerhof (DE); Niedenbrück, Matthias, 67117, Limburgerhof (DE); Haden, Egon, 67259, Kleinniedesheim (DE)

(57) **Abstract**

A method of improving the health of plants comprising treating a site with at least one compound of formula I, 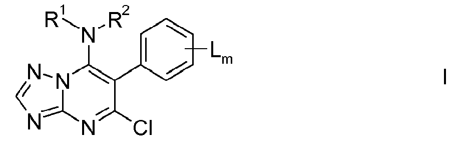 in which the substituents are as defined in the specification, or their agriculturally compatible salts.

## Description

The present invention relates to a method of improving the health of plants by applying at least a triazolopyrimidine derivative of the formula I, 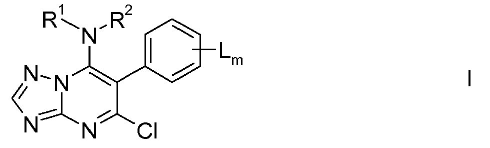 in which the variables are as defined below:
R¹ is C₁-C₆-alkyl, C₁-C₆-haloalkyl or C₃-C₆-alkenyl;
R² is hydrogen or one of the groups mentioned for R¹;
R¹ and R² together may also form a straight-chain or branched C₃-C₈-alkylene chain;
L is fluorine, chlorine or bromine;
m is 2 or 3;
to the plants or the locus thereof, and to active compounds combinations for improving the health of plants.

One typical problem arising in the field of pest control lies in the need to reduce the dosage rates of the active ingredient in order to reduce or avoid unfavorable environmental or toxicological effects whilst still allowing effective pest and pathogen control.

Another problem encountered concerns the need to have available pest control agents which are effective against a broad spectrum of pathogens.

Another problem underlying the present invention is the desire for compositions that improve plants, a process which is commonly and hereinafter referred to as "plant health". For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an object of the present invention to provide a method which solve the problems outlined above.

We have found that this object is in part or in whole achieved by the method defined at the outset.

The present invention relates to plant-protecting active ingredients and mixtures with increased efficacy and to a method of improving the health of plants by applying said compounds and mixtures to the plants or the locus thereof.

It has been found that the action of the compounds of formula I goes beyond the known fungicidal action. It has been shown that the compounds of formula I exhibit plant health effects in the frame of the present invention. The term plant health comprises various sorts of improvements of plants that are not connected to the control of harmful fungi.

The compounds of the formula I, their preparation and their action against harmful fungi are known from the literature (EP-A 550 113; WO 98/46607; WO 98/46608).

Fungicidal mixtures of 5-chlorotriazolopyrimidines with fungicidally active compounds are known in a general manner from EP-A 988 790 and US 6 268 371.

In the definitions of the symbols given for the formula above, collective terms were used which generally represent the following substituents:
halogen: fluorine, chlorine, bromine and iodine;
alkyl: saturated straight-chain or branched hydrocarbon radicals having 1 to 4, 6, 8 or 10 carbon atoms, for example C₁-C₆-alkyl, such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl;
haloalkyl: straight-chain or branched alkyl groups having 1 to 2, 4 or 6 carbon atoms (as mentioned above), where some or all of the hydrogen atoms in these groups may be replaced by halogen atoms as mentioned above: in particular C₁-C₂-haloalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl or 1,1,1-trifluoroprop-2-yl.

With a view to the intended use of the compounds of the formula I, particular preference is given to the following meanings of the substituents, in each case on their own or in combination:

Suitable for the object of the invention are in particular those compounds of the formula I in which R¹ and R² together form a straight-chain or branched C₃-C₈-alkylene chain. These compounds correspond to formula I.1, 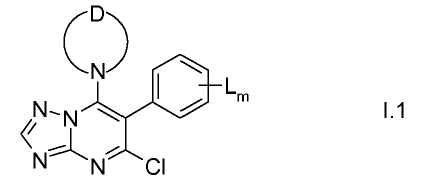 where D is a straight-chain or branched C₃-C₈-alkylene chain, in particular a branched C₅-alkylene chain, such as 3-methylpentylene.

Preference is likewise given to compounds of the formula I in which the substituted 6-phenyl group is a 2,4,6-trifluorophenyl ring. These compounds correspond to formula I.2, 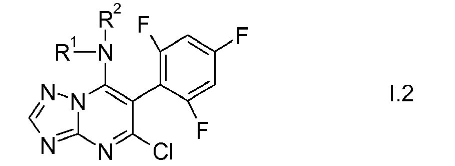 where R¹ and R² are as defined for formula I.

In addition, the invention also preferably provides the following embodiment of the compounds of the formula I:

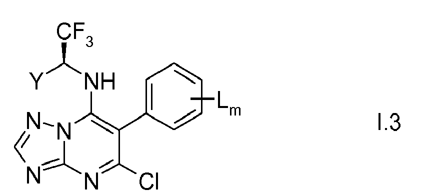

In formula I.3, Y is hydrogen or methyl.

Particular preference is given to the following compounds of the formula I:

| No. | R¹ | R² | Lₘ |
|---|---|---|---|
| I-1 | -CH₂CH₂CH(CH₃)CH₂CH₂- | | 2,4,6-F₃ |
| I-2 | -CH₂CH₂CH(CH₃)CH₂CH₂- | | 2-F,6-Cl |
| I-3 | (S) CH(CH₃)CF₃ | H | 2,4,6-F₃ |

The compound I-1, 5-chloro-7-(4-methylpiperidin-1-yl)-6-(2,4,6-trifluorophenyl)-[1,2,4]triazolo[1,5-a]pyrimidine is especially preferred for use in the invention.

In the method according to the invention the application of one compound of formula I usually is sufficient, however, it may be advantageously to use more than one compound of formula I.

The compounds of formula I mentioned above can also be employed in the form of their agriculturally compatible salts. These are usually salts or adducts with inorganic or organic acids or with metal ions, such as alkali metal or alkaline earth metal salts, e.g. sodium, potassium or calcium salts.

Examples of inorganic acids are hydrohalic acids, such as hydrogen fluoride, hydrogen chloride, hydrogen bromide and hydrogen iodide, sulfuric acid, phosphoric acid and nitric acid.

Suitable organic acids are, for example, formic acid, carbonic acid and alkanoic acids, such as acetic acid, trifluoroacetic acid, trichloroacetic acid and propionic acid, and also glycolic acid, lactic acid, succinic acid, citric acid, benzoic acid, cinnamic acid, oxalic acid, p-toluenesulfonic acid, salicylic acid, p-aminosalicylic acid, 2-phenoxybenzoic acid or 2-acetoxybenzoic acid.

Suitable metal ions are in particular the ions of the elements of the first to eighth transition group, especially chromium, manganese, iron, cobalt, nickel, copper, zinc, and additionally those of the second main group, especially calcium and magnesium, and of the third and fourth main group, in particular aluminum, tin and lead. If appropriate, the metals can be present in the different valencies that they can assume.

In one embodiment of the invention, mixtures of an azolopyrimidinylamine and an active compound II are used. Under certain conditions, it may be advantageous to combine an azolopyrimidinylamine (compound I) with two or more active compounds II. In addition, mixtures of two or more compounds I with one or more active compounds II may also be suitable. The compound(s) I can be used as a synergist for a large number of different active compounds. The simultaneous, that is joint or separate, application of the compound(s) I with at least one active compound II increases the fungicidal activity and the activity for increasing the health of plants in a superadditive manner.

When preparing the mixtures, preference is given to using the pure active compounds which, if required, may be mixed with further active compounds against harmful fungi or other pests, such as insects, arachnids or nematodes, or else herbicidal or growth-regulating active compounds or fertilizers as further active components.

Preferred insecticidal compounds II are selected from the following:
A.1. Organo(thio)phosphates: acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
A.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
A.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;
A.4. Juvenile hormone mimics: hydroprene, kinoprene, methoprene, fenoxycarb, pyriproxyfen;
A.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), thiacloprid, thiocyclam, thiosultap-sodium, the thiazol compound of formula (Γ¹) 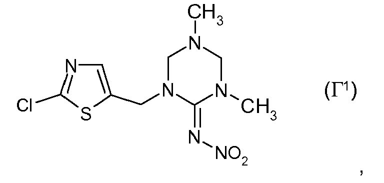
A.6. GABA gated chloride channel antagonist compounds: chlordane, endosulfan, gamma-HCH (lindane); acetoprole, ethiprole, fipronil, pyrafluprole, pyriprole, vaniliprole, 5-Amino-1-(2,6-dichloro-4-trifluoromethyl-phenyl)-4-trifluoromethanesulfinyl-1H-pyrazole-3-carbothioic acid amide
A.7. Chloride channel activators: abamectin, emamectin benzoate, milbemectin, lepimectin;
A.8. METI I compounds: fenazaquin, fenpyroximate, pyrimidifen, pyridaben, tebufenpyrad, tolfenpyrad, flufenerim, rotenone;
A.9. METI II and III compounds: acequinocyl, fluacyprim, hydramethylnon;
A.10. Uncouplers of oxidative phosphorylation: chlorfenapyr, DNOC;
A.11. Inhibitors of oxidative phosphorylation: azocyclotin, cyhexatin, diafenthiuron, fenbutatin oxide, propargite, tetradifon;
A.12. Moulting disruptors: cyromazine, chromafenozide, halofenozide, methoxyfenozide, tebufenozide;
A.13. Synergists: piperonyl butoxide, tribufos;
A.14. Sodium channel blocker compounds: indoxacarb, metaflumizone;
A.15. Fumigants: methyl bromide, chloropicrin sulfuryl fluoride;
A.16. Selective feeding blockers: crylotie, pymetrozine, flonicamid;
A.17. Mite growth inhibitors: clofentezine, hexythiazox, etoxazole;
A.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;
A.19. Lipid biosynthesis inhibitors: spirodiclofen, spiromesifen, spirotetramat;
A.20. octapaminergic agonsits: amitraz;
A.21. ryanodine receptor modulators: flubendiamide;
A.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic;
A.23. N-R'-2,2-dihalo-1-R"cyclo-propanecarboxamide-2-(2,6-dichloro-α,α,α-tri-fluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R'" is methyl or ethyl;
A.24. Malononitrile compounds: CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H;
A.25. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis.

The method of improving the health of plants comprises treating a site, for example a plant or a plant propagation material, with at least one compound of formula I. The latter term embraces seeds of all kinds (fruit, tubers, grains), cuttings, cut shoots and the like. One particular field of application is the treatment of all kinds of seeds. Such method may also include application of further fungicidal and/or insecticidal active compounds II. Such further compound II is as outlined in the specification.

The compound(s) I according to the invention can, also be present together with other active compounds II, e.g. with herbicides, insecticides, growth regulators, fungicides or else with fertilizers. Mixing the compounds I or the compositions comprising them results in many cases in an expansion of the activity on the plant health effect being obtained.

The following list of fungicides, in conjunction with which the compounds of formula I according to the invention can be used as fungicidal compound II, is intended to illustrate the possible combinations but not limit them:
A) strobilurins, such as azoxystrobin, dimoxystrobin, enestroburin, fluoxastrobin, kresoxim-methyl, methominostrobin, orysastrobin, picoxystrobin, pyraclostrobin, pyribencarb, trifloxystrobin, 2-(ortho-((2,5-dimethylphenyl-oxymethylen)phenyl)-3-methoxy-acrylsäuremethylester;
B) carbonic acid amides, such as anilides: benalaxyl, benalaxyl-M, benodanil, bixafen, boscalid, carboxin, carpropamid, diclocymet, fenfuram, fenhexamid, flutolanil, furametpyr, isotianil, kiralaxyl, mandipropamid, mepronil, metalaxyl, ofurace, oxadixyl, oxycarboxin, penthiopyrad, silthiofam, thifluzamide, tiadinil, N-(3',4'-dichloro-5-fluorobiphenyl-2-yl)-3-difluoromethyl-1-methyl-1 H-pyrazole-4-carboxylic acid amide, N-(2-(1,3-dimethyl-butyl)-phenyl)-1,3-dimethyl-5-fluoro-1H-pyrazole-4-carboxylic acid amide, N-(4'-chloro-3',5-difluoro-biphenyl-2-yl)-3-difluoromethyl-1-methyl-1H-pyrazole-4-carboxylic acid amide, N-(4'-chloro-3',5-difluoro-biphenyl-2-yl)-3-trifluoromethyl-1-methyl-1 H-pyrazole-4-carboxylic acid amide, N-(3',4'-dichloro-5-fluoro-biphenyl-2-yl)-3-trifluoromethyl-1-methyl-1 H-pyrazole-4-carboxylic acid amide, N-(3',5-difluoro-4'-methyl-biphenyl-2-yl)-3-difluoromethyl-1-methyl-1H-pyrazole-4-carboxylic acid amide, N-(3',5-difluoro-4'-methyl-biphenyl-2-yl)-3-trifluoromethyl-1-methyl-1 H-pyrazole-4-carboxylic acid amide, N-(2-bicyclopropyl-2-yl-phenyl)-3-difluoromethyl-1-methyl-1 H-pyrazole-4-carboxylic acid amide, N-(cis-2-bicyclopropyl-2-yl-phenyl)-3-difluoromethyl-1-methyl-1H-pyrazole-4-carboxylic acid amide, N-(trans-2-bicyclopropyl-2-yl-phenyl)-3-difluoromethyl-1-methyl-1H-pyrazole-4-carboxylic acid amide;
   carbonic acid morpholides: dimethomorph, flumorph;
   benzoic acid amides: flumetover, fluopicolide, fluopyram, zoxamide;
C) azoles, such as triazoles: azaconazole, bitertanol, bromuconazole, cyproconazole, difenoconazole, diniconazole, epoxiconazole, fenbuconazole, fluquinconazole, flusilazole, flutriafol, hexaconazol, imibenconazole, ipconazole, metconazol, myclobutanil, oxpoconazol, paclobutrazol, penconazole, propiconazole, prothioconazole, simeconazole, tebuconazole, tetraconazole, triadimefon, triadimenol, triticonazole;
   imidazoles: cyazofamid, imazalil, pefurazoate, prochloraz, triflumizole;
   benzimidazoles: benomyl, carbendazim, fuberidazole, thiabendazole;
   others: ethaboxam, etridiazole, hymexazole, 1-(4-chloro-phenyl)-1-(propin-2-yloxy)-3-(4-(3,4-dimethoxy-phenyl)-isoxazol-5-yl)-propan-2-one;
D) nitrogen containing heterocycles, such as pyridines: fluazinam, pyrifenox, 3-[5-(4-chloro-phenyl)-2,3-dimethyl-isoxazolidin-3-yl]-pyridine;
   pyrimidines: bupirimate, cyprodinil, diflumetorim, fenarimol, ferimzone, mepanipyrim, nitrapyrin, nuarimol, pyrimethanil;
   pyrroles: fenpiclonil, fludioxonil;
   morpholines: aldimorph, dodemorph, fenpropimorph, tridemorph;
   dicarboximides: fluoroimid, iprodione, procymidone, vinclozolin;
   non-aromatic five-membered rings: famoxadone, fenamidone, octhilinone, probenazole;
   others: acibenzolar-S-methyl, amisulbrom, anilazin, blasticidin-S, captafol, captan, chinomethionat, dazomet, debacarb, diclomezine, fenoxanil, fenpropidin, folpet, piperalin, proquinazid, pyroquilon, quinoxyfen, triazoxid, tricyclazole, tricyclazole, triforine, 5-chloro-7-(4-methyl-piperidin-1-yl)-6-(2,4,6-trifluoro-phenyl)-[1,2,4]triazolo[1,5-a]pyrimidine, 2-butoxy-6-iodo-3-propyl-chromen-4-one
E) carbamates and dithiocarbamates, such as: dithiocarbamates: ferbam, mancozeb, maneb, metam, metiram, propineb, thiram, zineb, ziram;
   carbamates: diethofencarb, flubenthiavalicarb, iprovalicarb, propamocarb, valiphenal, N-(1-(1-(4-cyanophenyl)ethanesulfonyl)-but-2-yl) carbamic acid-(4-fluorophenyl) ester;
F) guanidines, such as: dodine, guazatine, iminoctadine;
G) antibiotics: kasugamycin, polyoxine, streptomycin, validamycin A;
H) organometal compounds: fentin salts (e.g. fentin acetate, fentin chloride, fentin hydroxide);
I) sulphur containing heterocycles, such as: dithianon, isoprothiolane;
J) organophosphorous compounds, such as: edifenphos, fosetyl, fosetyl-aluminium, iprobenfos, pyrazophos, tolclofos-methyl;
K) organochloro compounds, such as: chlorothalonil, dichlofluanid, dichlorophen, flusulfamide, hexachlorbenzene, pencycuron, phthalide, quintozene, thiophanate-methyl, tolylfluanid;
L) inorganic compounds, such as: sulphur, phosphorous acid (H₃PO₃) and its salts, copper salts, e. g. bordeaux mixture, copper acetate, copper hydroxide, copper oxychloride, basic copper sulphate;
M) nitrophenyl derivatives, such as: binapacryl, dicloran, dinobuton, dinocap, tecnazen;
N) growth retardants: prohexadione and its salts, trinexapac-ethyl, chlormequat, mepiquat-chloride and diflufenzopyr;
O) others: bronopol, cyflufenamid, cymoxanil, diphenylamin, metrafenone, mildiomycin, spiroxamine, tolylfluanid, N-(cyclopropylmethoxyimino-(6-difluoromethoxy-2,3-difluoro-phenyl)-methyl)-2-phenyl acetamide.

Preferred fungicides are those selected from the group consisting of
- azoles: benomyl, difenoconazole, epoxiconazole, fluquinconazole, flutriafol, hymexazole, imazalil, metconazole, prothioconazole, tebuconazole; thiabendazole, triadimenol, prochloraz, triticonazole, carbendazim;
- strobilurins: azoxystrobin, kresoxim-methyl, orysastrobin, pyraclostrobin, trifloxystrobin;
- carboxamides, such as boscalid, carboxin, metalaxyl, oxadixyl, dimethomorph; silthiofam, mandipropamid;
- heterocylic compounds, such as fludioxonil; captan, dazomet, pyrimethanil; iprodione;
- carbamates, such as mancozeb, maneb, metiram, thiram;
- other active compounds, selected from inorganic active compounds: sulphur, Bordeaux mixture, copper acetate, copper hydroxide, copper oxychloride, basic copper sulfate; others: guazatine, streptomycin.

The compounds II, their preparation and their action against harmful fungi is also know from prior art (cf.: Tomlin, The Pesticide Manual, 13th Ed., BCPC Publications 2003; http://www.hclrss.dernon.co.uk/index.html).

Another preferred embodiments relate to the compositions listed in table B, where in each case one row of table B corresponds to a fungicidal composition comprising the particular compound of the formula I mentioned (component 1) and one active compound of the groups mentioned, this active compound preferably being selected from the preferred embodiments defined above.

**Table B**

| Row | Component 1 | Component 2 |
|---|---|---|
| B-1 | Tab. 1, I-1 | an active compound II from group A |
| B-2 | Tab. 1, I-1 | an active compound II from group B |
| B-3 | Tab. 1, I-1 | an active compound II from group C |
| B-4 | Tab. 1, I-1 | an active compound II from group D |
| B-5 | Tab. 1, I-1 | an active compound II from group E |
| B-6 | Tab. 1, I-1 | an active compound II from group F |
| B-7 | Tab. 1, I-1 | an active compound II from group G |
| B-8 | Tab. 1, I-1 | an active compound II from group H |
| B-9 | Tab. 1, I-1 | an active compound II from group I |
| B-10 | Tab. 1, I-1 | an active compound II from group J |
| B-11 | Tab. 1, I-1 | an active compound II from group K |
| B-12 | Tab. 1, I-1 | an active compound II from group L |
| B-13 | Tab. 1, I-1 | an active compound II from group M |
| B-14 | Tab. 1, I-1 | an active compound II from group N |
| B-15 | Tab. 1, I-1 | an active compound II from group O |
| B-16 | Tab. 1, I-2 | an active compound II from group A |
| B-17 | Tab. 1, I-2 | an active compound II from group B |
| B-18 | Tab. 1, I-2 | an active compound II from group C |
| B-19 | Tab. 1, I-2 | an active compound II from group D |
| B-20 | Tab. 1, I-2 | an active compound II from group E |
| B-21 | Tab. 1, I-2 | an active compound II from group F |
| B-22 | Tab. 1, I-2 | an active compound II from group G |
| B-23 | Tab. 1, I-2 | an active compound II from group H |
| B-24 | Tab. 1, I-2 | an active compound II from group I |
| B-25 | Tab. 1, I-2 | an active compound II from group J |
| B-26 | Tab. 1, I-2 | an active compound II from group K |
| B-27 | Tab. 1, I-2 | an active compound II from group L |
| B-28 | Tab. 1, I-2 | an active compound II from group M |
| B-29 | Tab. 1, I-2 | an active compound II from group N |
| B-30 | Tab. 1, I-2 | an active compound II from group O |
| B-31 | Tab. 1, I-3 | an active compound II from group A |
| B-32 | Tab. 1, I-3 | an active compound II from group B |
| B-33 | Tab. 1, I-3 | an active compound II from group C |
| B-34 | Tab. 1, I-3 | an active compound II from group D |
| B-35 | Tab. 1, I-3 | an active compound II from group E |
| B-36 | Tab. 1, I-3 | an active compound II from group F |
| B-37 | Tab. 1, I-3 | an active compound II from group G |
| B-38 | Tab. 1, I-3 | an active compound II from group H |
| B-39 | Tab. 1, I-3 | an active compound II from group I |
| B-40 | Tab. 1, I-3 | an active compound II from group J |
| B-41 | Tab. 1, I-3 | an active compound II from group K |
| B-42 | Tab. 1, I-3 | an active compound II from group L |
| B-43 | Tab. 1, I-3 | an active compound II from group M |
| B-44 | Tab. 1, I-3 | an active compound II from group N |
| B-45 | Tab. 1, I-3 | an active compound II from group O |

It has been found that the action of the aforementioned mixtures goes far beyond the fungicidal action of the fungicide(s) present in the mixture alone (synergistic mixtures). It has been shown that the mixtures exhibit plant health effects (as outlined above) in the frame of the present invention. The term plant health comprises various sorts of improvements of plants that are not connected to the control of pests or pathogens.

In one embodiment of the method according to the present invention the compound of formula I is applied alone.

In another embodiment of the method according to the present invention a mixture of a compound of formula I, especially one of the preferred compounds as outlined above, with a further fungicide is applied. The respective preferred embodiments are in accordance with the above-mentioned ones.

In another embodiment the mixture comprises three active ingredients. The respective preferred embodiments are in accordance with the above-mentioned ones.

Another embodiment relates to mixtures compring the compounds of formula I and compounds II in a synergistic effective amount and are used for combating harmful fungi.

In one embodiment of the present invention, the compound of formula I or compounds of formula I is/are used for a method of improving the health of plants, which comprises treating a site, for example a plant or a plant propagation material, that is infested or liable to be infested by fungi with at least a compound of formula I. In another embodiment of the method application can be made in the absence of pest pressure.

In another embodiment of the present invention, the compound of formula I or compounds of formula I is/are used in combination with a further active compound II for a method of controlling fungi and/or improving the health of plants, which comprises treating a site, for example a plant or a plant propagation material, that is infested or liable to be infested by fungi with the active compounds in any desired sequence or simultaneously, that is, jointly or separately.

The inventive method is suitable for foliar application in living crops of plants, for soil applications prior to sowing or planting, including overall soil treatment and furrow applications, as well as, in particular, for dressing applications on plant propagation material. The latter term embraces seeds of all kinds (fruit, tubers, grains), cuttings, cut shoots and the like. One particular field of application is the treatment of all kinds of seeds.

The compounds of formula I, and the combinations of a compound of formula I and a further compound II are especially suitable for controlling the following harmful fungi:
- Alternaria species on vegetables, oilseed rape, sugar beet, cereals, fruit and rice, such as, e.g. A. solani or A. alternata on potatoes and tomatoes,
- Aphanomyces species on sugar beet and vegetables,
- Ascochyta species on cereals and vegetables, e.g. Ascochyta tritici on wheat,
- Bipolaris and Drechslera species on corn, cereals, rice and lawns, such as, e.g. D. maydis on corn,
- Blumeria graminis (powdery mildew) on cereals, e.g. wheat or barley,
- Botrytis cinerea (gray mold) on strawberries, vegetables, flowers, wheat and grapes,
- Bremia lactucae on lettuce,
- Cercospora species on corn, soybeans, rice and sugar beet, e.g. Cercospora sojina or Cercospora kikuchii on soybeans,
- Cladosporium herbarum on wheat,
- Cochliobolus species on corn, cereals, rice, such as, e.g. Cochliobolus sativus on cereals, Cochliobolus miyabeanus on rice,
- Colletotricum species on soybeans and cotton, e.g. Colletotrichum truncatum on soybeans,
- Corynespora cassiicola on soybeans,
- Dematophora necatrix on soybeans,
- Diaporthe phaseolorum on soybeans,
- Drechslera species, Pyrenophora species on corn, cereals, rice and lawns, such as, e.g. D. teres on barley or D. tritici-repentis on wheat,
- Esca on grapevines, caused by Phaeoacremonium chlamydosporium, Ph. Aleophilum and Formitipora punctata (syn. Phellinus punctatus);
- Elsinoe ampelina on wheat,
- Entyloma oryzae on rice,
- Epicoccum spp. on wheat,
- Exserohilum species on corn,
- Erysiphe cichoracearum and Sphaerotheca fuliginea on cucumbers,
- Fusarium and Verticillium species on various plants, such as, e.g. F. graminearum or F. culmorum on cereals or F. oxysporum on a multitude of plants, such as, e.g. tomatoes, and Fusarium solani on soybeans,
- Gaeumanomyces graminis on cereals, e.g. wheat of barley,
- Glomerella cingulata on grapes and other crops,
- Gibberella species on cereals and rice (for example Gibberella fujikuroi on rice);
- Grainstaining complex on rice;
- Guignardia budwelli on grapes,
- Helminthosporium species on corn and rice,
- Isariopsis clavispora on grapes,
- Macrophomina phaseolina on soybeans,
- Michrodochium nivale on cereals;
- Microsphaera diffusa on soybeans,
- Mycosphaerella species on cereals, bananas and groundnuts, such as, e.g., M. graminicola on wheat or M. fijiensis on bananas;
- Peronospora species on cabbage and bulbous plants, such as, e.g., P. brassicae on cabbage, P. destructor on onions, or P. manshurica on soybeans,
- Phakopsara pachyrhizi and Phakopsara meibomiae on soybeans,
- Phialophora gregata on soybeans,
- Phomopsis species on sunflowers, soybeans (e.g. P. phaseoli) and grapes (e.g. P. viticola),
- Phytophthora species on various plants, such as, e.g. P. capsici on bell pepper, P. megasperma on soybeans, and P. infestans on potatoes and tomatoes,
- Plasmopara viticola on grapevines,
- Podosphaera leucotricha on apples,
- Pseudocercosporella herpotrichoides on cereals (wheat or barley),
- Pseudoperonospora on various plants, such as, e.g. P. cubensis on cucumber or P. humili on hops,
- Pseudopezicula tracheiphilai on grapes,
- Puccinia species on various plants, such as, e.g. P. triticina, P. striformins, P. hordei or P.graminis on cereals (wheat or barley) or P. asparagi on asparagus,
- Pyricularia oryzae, Corticium sasakii, Sarocladium oryzae, S.attenuatum, Entyloma oryzae on rice,
- Pyrenophora tritici-repentis on wheat or Pyrenophora teres on barley,
- Pyricularia grisea on lawns and cereals,
- Pythium spp. on lawns, rice, corn, wheat, cotton, oilseed rape, sunflowers, sugar beet, vegetables and other plants, such as, e.g. P. ultiumum on various plants, P. aphanidermatum on lawns;
- Ramularia collo-cygni (physiological leaf spots) on barley,
- Rhizoctonia species on cotton, rice, potatoes, lawns, corn, oilseed rape, potatoes, sugar beet, vegetables and on various plants, such as, e.g. R. solani on beet and various plants, and Rhizoctonia cerealis on wheat or barley,
- Rhynchosporium secalis on barley, rye and triticale,
- Sclerotinia species on oilseed rape and sunflowers, and e.g. S. sclerotiorum or S. rolfsii on soybeans,
- Septoria glycines on soybeans,
- Septoria tritici and Stagonospora nodorum on wheat,
- Erysiphe (syn. Uncinula) necator on grapevines,
- Setospaeria species on corn and lawns,
- Sphacelotheca reilinia on corn,
- Stagonospora nodorum on wheat,
- Thievaliopsis species on soybeans and cotton,
- Tilletia species on cereals,
- Typhula incarnata on wheat or barley,
- Ustilago species on cereals, corn and sugar cane, such as, e.g. U. maydis on corn,
- Venturia species (scab) on apples and pears, such as, for example, V. inaequalis on apples.

The compounds of formula I and the further active compound(s) II can be applied simultaneously, that is jointly or separately, or in succession; the sequence, in the case of separate application, generally not having any effect on the fungicidal and/or the plant health action.

The compounds of formula I and the further active compound(s) II are usually applied in a synergistically effective amount, preferably in a weight ratio of from 100:1 to 1:100, in particular from 20:1 to 1:20, preferably from 10:1 to 1:10.

Depending on the desired effect, the application rates of the compounds of formula I according to the invention are, especially in the case of areas under agricultural cultivation, from 5 to 2 000 g/ha, preferably from 50 to 1 500 g/ha, in particular from 50 to 750 g/ha.

In the treatment of seed, the application rates of the compounds of formula I according to the invention are generally from 3 kg : 30 g a.i./100 kg, 100 g : 1 g a.i./100 kg, 30 g : 3 kg a.i./100 kg or 1 g : 100g a.i./100 kg. For some specific crop seeds, such as lettuce or onions, the rates can be higher.

A further embodiment of the present invention is directed to the seeds being treated with the compounds of formula I according to the present invention.

This invention also relates to a method of improving the health of plants, which comprises treating a site, for example a plant or a plant propagation material, with at least a compound of formula I. Such method may also include application of further fungicidal and/or insecticidal active compounds as outlined above.

The compounds of formula I may also be used in crops which tolerate the action of herbicides or fungicides or insecticides owing to breeding, including genetic engineering methods.

The compounds of formula I can be employed in transgenic crops which are resistant to herbicides from the group consisting of the sulfonylureas, imidazolinones, glufosinate-ammonium or glyphosate-isopropylammonium and analogous active substances (see for example, EP-A 242 236, EP-A 242 246) (WO 92/00377) (EP-A 257 993, US 5,013,659) or in transgenic crop plants, for example cotton, with the capability of producing Bacillus thuringiensis toxins (Bt toxins) which make the plants resistant to certain pests (EP-A 142 924, EP-A 193 259).

The compound(s) of formula I can be used also for the treatment of plants which have modified characteristics in comparison with existing plants consist, which can be generated for example by traditional breeding methods and/or the generation of mutants, or by recombinant procedures). For example, a number of cases have been described of recombinant modifications of crop plants for the purpose of modifying the starch synthesized in the plants (e.g. WO 92/11376, WO 92/14827, WO 91/19806) or of transgenic crop plants having a modified fatty acid composition (WO 91/13972).

The active compound(s) according to the invention can be prepared, for example, in the form of directly sprayable solutions, powders and suspensions or in the form of highly concentrated aqueous, oily or other suspensions, dispersions, emulsions, oil dispersions, pastes, dusts, compositions for spreading or granules, and be applied by spraying, atomizing, dusting, broadcasting or watering or colored suspension, solution, emulsion to be applied as such or as water based slurry with seed treatment machinery. The use form depends on the particular purpose; in each case, it should ensure a distribution of the mixture according to the invention, which is as fine and uniform as possible.

The active compound(s) can be converted into the customary formulations, for example solutions, emulsions, suspensions, dusts, powders, pastes and granules. The use form depends on the particular intended purpose; in each case, it should ensure a fine and even distribution of the compound according to the invention.

The formulations are prepared in a known manner (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8), for example by extending the active compound with auxiliaries suitable for the formulation of agrochemicals, such as solvents and/or carriers, if desired emulsifiers, surfactants and dispersants, preservatives, antifoaming agents, anti-freezing agents, for seed treatment formulation also optionally colorants and/or binders and/or gelling agents.

Examples of suitable solvents are water, aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used.

Suitable emulsifiers are nonionic and anionic emulsifiers (for example polyoxyethylene fatty alcohol ethers, alkylsulfonates and arylsulfonates).

Examples of dispersants are lignin-sulfite waste liquors and methylcellulose.

Suitable surfactants used are alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Substances which are suitable for the preparation of directly sprayable solutions, emulsions, pastes or oil dispersions are mineral oil fractions of medium to high boiling point, such as kerosene or diesel oil, furthermore coal tar oils and oils of vegetable or animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, isophorone, highly polar solvents, for example dimethyl sulfoxide, N-methylpyrrolidone or water.

Also anti-freezing agents such as glycerin, ethylene glycol, propylene glycol and bactericides such as can be added to the formulation.

Suitable antifoaming agents are for example antifoaming agents based on silicon or magnesium stearate.

Suitable preservatives are for example dichlorophen und enzylalkoholhemiformal.

Seed Treatment formulations may additionally comprise binders and optionally colorants.

Binders can be added to improve the adhesion of the active materials on the seeds after treatment. Suitable binders are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol®, Polymin®), polyethers, polyurethans, polyvinylacetate, tylose and copolymers derived from these polymers.

Optionally, also colorants can be included in the formulation. Suitable colorants or dyes for seed treatment formulations are Rhodamin B, C.I. Pigment Red 112, C.I. Solvent Red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

An Example of a gelling agent is carrageen (Satiagel^{®}).

Powders, materials for spreading and dustable products can be prepared by mixing or concomitantly grinding the active substances with a solid carrier.

Granules, for example coated granules, impregnated granules and homogeneous granules, can be prepared by binding the active compounds to solid carriers.

Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, for example, ammonium sulfate, ammonium phosphate, ammonium nitrate, ureas, and products of vegetable origin, such as cereal meal, tree bark meal, wood meal and nutshell meal, cellulose powders and other solid carriers.

In general, the formulations comprise from 0.01 to 95% by weight, preferably from 0.1 to 90% by weight, of the active compound(s). In this case, the active compound(s) are employed in a purity of from 90% to 100% by weight, preferably 95% to 100% by weight(according to NMR spectrum).

The active compound concentrations in the ready-to-use preparations can be varied within relatively wide ranges. In general, they are from 0.0001 to 10%, preferably from 0.01 to 1% per weight.

The active compounds may also be used successfully in the ultra-low-volume process (ULV), it being possible to apply formulations comprising over 95% by weight of active compound, or even to apply the active compound without additives.

For seed treatment purposes, respective formulations can be diluted 2-10 fold leading to concentrations in the ready to use preparations of 0,01 to 60% by weight active compound by weight, preferably 0,1 to 40% by weight.

The compound(s) of formula I can be used as such, in the form of their formulations or the use forms prepared therefrom, for example in the form of directly sprayable solutions, powders, suspensions or dispersions, emulsions, oil dispersions, pastes, dustable products, materials for spreading, or granules, by means of spraying, atomizing, dusting, spreading or pouring. The use forms depend entirely on the intended purposes; they are intended to ensure in each case the finest possible distribution of the active compound(s) according to the invention.

Aqueous use forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. However, it is also possible to prepare concentrates composed of active substance, wetter, tackifier, dispersant or emulsifier and, if appropriate, solvent or oil, and such concentrates are suitable for dilution with water.

The following are examples of formulations:

### 1. Products for dilution with water for foliar applications. For seed treatment purposes, such products may be applied to the seed diluted or undiluted.

### A) Water-soluble concentrates (SL, LS)

10 parts by weight of the active compound(s) are dissolved in 90 parts by weight of water or a water-soluble solvent. As an alternative, wetters or other auxiliaries are added. The active compound(s) dissolves upon dilution with water, whereby a formulation with 10 % (w/w) of active compound(s) is obtained.

### B) Dispersible concentrates (DC)

20 parts by weight of the active compound(s) are dissolved in 70 parts by weight of cyclohexanone with addition of 10 parts by weight of a dispersant, for example polyvinylpyrrolidone. Dilution with water gives a dispersion, whereby a formulation with 20% (w/w) of active compound(s) is obtained.

### C) Emulsifiable concentrates (EC)

15 parts by weight of the active compound(s) are dissolved in 7 parts by weight of xylene with addition of calcium dodecylbenzenesulfonate and castor oil ethoxylate (in each case 5 parts by weight). Dilution with water gives an emulsion, whereby a formulation with 15% (w/w) of active compound(s) is obtained.

### D) Emulsions (EW, EO, ES)

25 parts by weight of the active compound(s) are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion. Dilution with water gives an emulsion, whereby a formulation with 25% (w/w) of active compound(s) is obtained.

### E) Suspensions (SC, OD, FS)

In an agitated ball mill, 20 parts by weight of the active compound(s) are comminuted with addition of 10 parts by weight of dispersants, wetters and 70 parts by weight of water or of an organic solvent to give a fine active compound(s) suspension. Dilution with water gives a stable suspension of the active compound(s), whereby a formulation with 20% (w/w) of active compound(s) is obtained.

### F) Water-dispersible granules and water-soluble granules (WG, SG)

50 parts by weight of the active compound(s) are ground finely with addition of 50 parts by weight of dispersants and wetters and made as water-dispersible or water-soluble granules by means of technical appliances (for example extrusion, spray tower, fluidized bed). Dilution with water gives a stable dispersion or solution of the active compound(s), whereby a formulation with 50% (w/w) of active compound(s) is obtained.

### G) Water-dispersible powders and water-soluble powders (WP, SP, SS, WS)

75 parts by weight of the active compound(s) are ground in a rotor-stator mill with addition of 25 parts by weight of dispersants, wetters and silica gel. Dilution with water gives a stable dispersion or solution of the active compound(s), whereby a formulation with 75% (w/w) of active compound(s) is obtained.

### Gel-Formulation (GF)

In an agitated ball mill, 20 parts by weight of the active compound(s) are comminuted with addition of 10 parts by weight of dispersants, 1 part by weight of a gelling agent wetters and 70 parts by weight of water or of an organic solvent to give a fine active compound(s) suspension. Dilution with water gives a stable suspension of the active compound(s), whereby a formulation with 20% (w/w) of active compound(s) is obtained.

### 2. Products to be applied undiluted for foliar applications. For seed treatment purposes, such products may be applied to the seed diluted.

### I) Dustable powders (DP, DS)

5 parts by weight of the active compound(s) are ground finely and mixed intimately with 95 parts by weight of finely divided kaolin. This gives a dustable product having 5% (w/w) of active compound(s)

### J) Granules (GR, FG, GG, MG)

0.5 part by weight of the active compound(s) is ground finely and associated with 95.5 parts by weightof carriers, whereby a formulation with 0.5% (w/w) of active compound(s) is obtained. Current methods are extrusion, spray-drying or the fluidized bed. This gives granules to be applied undiluted for foliar use.

### K) ULV solutions (UL)

10 parts by weight of the active compound(s) are dissolved in 90 parts by weight of an organic solvent, for example xylene. This gives a product having 10% (w/w) of active compound(s), which is applied undiluted for foliar use.

Conventional seed treatment formulations include for example flowable concentrates FS, solutions LS, powders for dry treatment DS, water dispersible powders for slurry treatment WS, water-soluble powders SS and emulsion ES and EC and gel formulation GF. These formulation can be applied to the seed diluted or undiluted. Application to the seeds is carried out before sowing, either directly on the seeds.

In a preferred embodiment a FS formulation is used for seed treatment. Typcially, a FS formulation may comprise 1-800 g/I of active ingredient, 1-200 g/I Surfactant, 0 to 200 g/I antifreezing agent, 0 to 400 g/I of binder, 0 to 200 g/I of a pigment and up to 1 liter of a solvent, preferably water.

Various types of oils, wetters, adjuvants, herbicides, fungicides, other pesticides, or bactericides may be added to the active compounds, if appropriate not until immediately prior to use (tank mix). These agents can be admixed with the agents according to the invention in a weight ratio of 1:100 to 100:1, preferably 1:10 to 10:1.

Suitable adjuvants in this sense are in particular: organically modified polysiloxanes, for example Break Thru S 240^{®}; alcohol alkoxylates, for example Atplus 245^{®}, Atplus MBA 1303^{®}, Plurafac LF 300^{®} and Lutensol ON 30^{®}; EO/PO block polymers, for example Pluronic RPE 2035^{®} and Genapol B^{®}; alcohol ethoxylates, for example Lutensol XP 80^{®}; and sodium dioctylsulfosuccinate, for example Leophen RA^{®}.

The testing of the mixtures according to the present invention shows that the compound(s) of formula I are effective in improving plant health.

## Claims

1. A method of improving the health of plants comprising treating a site with at least one compound of formula I, 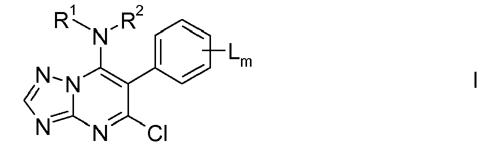 in which the variables are as defined below:
R¹ is C₁-C₆-alkyl, C₁-C₆-haloalkyl or C₃-C₆-alkenyl;
R² is hydrogen or one of the groups mentioned for R¹;
R¹ and R² together may also form a straight-chain or branched C₃-C₈-alkylene chain;
L is fluorine, chlorine or bromine;
m is 2 or 3;
or their agriculturally compatible salts.

2. A method as defined in claim 1, wherein the compound of formula I has the following meaning:
R¹ and R² together form a straight-chain or branched C₃-C₈-alkylene chain.

3. A method as defined in claim 1 or 2, wherein the compound of formula I is 5-chloro-7-(4-methylpiperidin-1-yl)-6-(2,4,6-trifluorophenyl)-[1,2,4]triazolo[1,5-a]pyrimidine.

4. A method as defined in any one of claims 1 to 3, wherin the site is a plant or a plant propagation material.

5. A method as defined in any one of claims 1 to 4, which comprises applying the active compounds in the absence of pest pressure.

6. A method as defined in any one of claims 1 to 5, which comprises applying in any desired sequence, simultaneously, that is, jointly or separately, or in succession, effective amounts of a combination of a compound of formula I and one or two further fungicides selected from the following groups:
A) strobilurins, such as azoxystrobin, dimoxystrobin, enestroburin, fluoxastrobin, kresoxim-methyl, methominostrobin, orysastrobin, picoxystrobin, pyraclostrobin, pyribencarb, trifloxystrobin, 2-(ortho-((2,5-dimethylphenyl-oxymethylen)phenyl)-3-methoxy-acrylsäuremethylester;
B) carbonic acid amides, such as anilides: benalaxyl, benalaxyl-M, benodanil, bixafen, boscalid, carboxin, carpropamid, diclocymet, fenfuram, fenhexamid, flutolanil, furametpyr, isotianil, kiralaxyl, mandipropamid, mepronil, metalaxyl, ofurace, oxadixyl, oxycarboxin, penthiopyrad, silthiofam, thifluzamide, tiadinil, N-(3',4'-dichloro-5-fluoro-biphenyl-2-yl)-3-difluoromethyl-1-methyl-1H-pyrazole-4-carboxylic acid amide, N-(2-(1,3-dimethyl-butyl)-phenyl)-1,3-dimethyl-5-fluoro-1 H-pyrazole-4-carboxylic acid amide, N-(4'-chloro-3',5-difluoro-biphenyl-2-yl)-3-difluoromethyl-1-methyl-1 H-pyrazole-4-carboxylic acid amide, N-(4'-chloro-3',5-difluoro-biphenyl-2-yl)-3-trifluoromethyl-1-methyl-1H-pyrazole-4-carboxylic acid amide, N-(3',4'-dichloro-5-fluoro-biphenyl-2-yl)-3-trifluoromethyl-1-methyl-1 H-pyrazole-4-carboxylic acid amide, N-(3',5-difluoro-4'-methylbiphenyl-2-yl)-3-difluoromethyl-1-methyl-1 H-pyrazole-4-carboxylic acid amide, N-(3',5-difluoro-4'-methyl-biphenyl-2-yl)-3-trifluoromethyl-1-methyl-1H-pyrazole-4-carboxylic acid amide, N-(2-bicyclopropyl-2-yl-phenyl)-3-difluoromethyl-1-methyl-1 H-pyrazole-4-carboxylic acid amide, N-(cis-2-bicyclopropyl-2-yl-phenyl)-3-difluoromethyl-1-methyl-1H-pyrazole-4-carboxylic acid amide, N-(trans-2-bicyclopropyl-2-yl-phenyl)-3-difluoromethyl-1-methyl-1H-pyrazole-4-carboxylic acid amide;
carbonic acid morpholides: dimethomorph, flumorph;
benzoic acid amides: flumetover, fluopicolide, fluopyram, zoxamide;
C) azoles, such as triazoles: azaconazole, bitertanol, bromuconazole, cyproconazole, difenoconazole, diniconazole, epoxiconazole, fenbuconazole, fluquinconazole, flusilazole, flutriafol, hexaconazol, imibenconazole, ipconazole, metconazol, myclobutanil, oxpoconazol, paclobutrazol, penconazole, propiconazole, prothioconazole, simeconazole, tebuconazole, tetraconazole, triadimefon, triadimenol, triticonazole;
imidazoles: cyazofamid, imazalil, pefurazoate, prochloraz, triflumizole;
benzimidazoles: benomyl, carbendazim, fuberidazole, thiabendazole;
others: ethaboxam, etridiazole, hymexazole, 1-(4-chloro-phenyl)-1-(propin-2-yloxy)-3-(4-(3,4-dimethoxy-phenyl)-isoxazol-5-yl)-propan-2-one;
D) nitrogen containing heterocycles, such as pyridines: fluazinam, pyrifenox, 3-[5-(4-chloro-phenyl)-2,3-dimethyl-isoxazolidin-3-yl]-pyridine;
pyrimidines: bupirimate, cyprodinil, diflumetorim, fenarimol, ferimzone, mepanipyrim, nitrapyrin, nuarimol, pyrimethanil;
pyrroles: fenpiclonil, fludioxonil;
morpholines: aldimorph, dodemorph, fenpropimorph, tridemorph; dicarboximides: fluoroimid, iprodione, procymidone, vinclozolin;
non-aromatic five-membered rings: famoxadone, fenamidone, octhilinone, probenazole;
others: acibenzolar-S-methyl, amisulbrom, anilazin, blasticidin-S, captafol, captan, chinomethionat, dazomet, debacarb, diclomezine, fenoxanil, fenpropidin, folpet, piperalin, proquinazid, pyroquilon, quinoxyfen, triazoxid, tricyclazole, tricyclazole, triforine, 5-chloro-7-(4-methyl-piperidin-1-yl)-6-(2,4,6-trifluorophenyl)-[1,2,4]triazolo[1,5-a]pyrimidine, 2-butoxy-6-iodo-3-propyl-chromen-4-one
E) carbamates and dithiocarbamates, such as: dithiocarbamates: ferbam, mancozeb, maneb, metam, metiram, propineb, thiram, zineb, ziram; carbamates: diethofencarb, flubenthiavalicarb, iprovalicarb, propamocarb, valiphenal, N-(1-(1-(4-cyanophenyl)ethanesulfonyl)-but-2-yl) carbamic acid-(4-fluorophenyl) ester;
F) guanidines, such as: dodine, guazatine, iminoctadine;
G) antibiotics: kasugamycin, polyoxine, streptomycin, validamycin A;
H) organometal compounds: fentin salts (e.g. fentin acetate, fentin chloride, fentin hydroxide);
I) sulphur containing heterocycles, such as: dithianon, isoprothiolane;
J) organophosphorous compounds, such as: edifenphos, fosetyl, fosetyl-aluminium, iprobenfos, pyrazophos, tolclofos-methyl;
K) organochloro compounds, such as: chlorothalonil, dichlofluanid, dichlorophen, flusulfamide, hexachlorbenzene, pencycuron, phthalide, quintozene, thiophanate-methyl, tolylfluanid;
L) inorganic compounds, such as: sulphur, phosphorous acid (H₃PO₃) and its salts, copper salts, e. g. bordeaux mixture, copper acetate, copper hydroxide, copper oxychloride, basic copper sulphate;
M) nitrophenyl derivatives, such as: binapacryl, dicloran, dinobuton, dinocap, tecnazen;
N) growth retardants: prohexadione and its salts, trinexapac-ethyl, chlormequat, mepiquat-chloride and diflufenzopyr;
O) others: bronopol, cyflufenamid, cymoxanil, diphenylamin, metrafenone, mildiomycin, spiroxamine, tolylfluanid, N-(cyclopropylmethoxyimino-(6-difluoro-methoxy-2,3-difluoro-phenyl)-methyl)-2-phenyl acetamide.

7. A method as defined in claim 6, which comprises applying in any desired sequence, simultaneously, that is, jointly or separately, or in succession, synergistically effective amounts of the combination of a compound of formula I and one or two further fungicides.

8. A method as defined in any one of claims 1 to 7, applied on crops which tolerate the action of herbicides or fungicides or insecticides owing to breeding, including genetic engineering methods.

9. A method of protection of seeds comprising contacting the seeds before sowing and/or after pregermination with a compound of formula I as defined in any one of claims 1 to 3 in effective amounts.

10. A method as claimed in claim 9 wherein the compound or the compound combination is applied in an amount of from 0.1 g to 5 kg per 100 kg of seeds.

11. The use of compounds of formula I as defined in any one of claims 1 to 3 for improving the health of plants.
